# EUROPEAN PATENT APPLICATION

(11) **EP 4 093 023 A1**
(43) Date of publication of application: **23.11.2022**
(21) Application number: 20921461.8
(22) Date of filing: 27.02.2020
(51) Int. Cl.: H04N 7/18, A63B 71/06, G06T 7/70

(54) **INFORMATION PROCESSING PROGRAM, DEVICE, AND METHOD**

(71) Applicant: FUJITSU LIMITED, Kawasaki-shi, Kanagawa 211-8588 (JP)
(72) Inventor: NAKAMURA, Kouji, Kawasaki-shi, Kanagawa 211-8588 (JP)
(74) Representative: Hoffmann Eitle
(86) International application number: PCT/JP2020/007998
(87) International publication number: WO 2021/171470

(57) **Abstract**

An object is to specify a section from the start to the end of a jump in figure skating.

An information processing device (10) estimates a takeoff-from-ice time tA and a landing-on-ice time tB based on silencing and return of a sound signal collected by a microphone (20) provided in ice of a skating rink, synchronizes time information between a video obtained by imaging a competitor (32) competing in the skating rink (30) with a camera (22) and the sound signal, and specifies, as a jump section, a section from a start frame mS to an end frame mE respectively corresponding to the takeoff-from-ice time tA and the landing-on-ice time tB. Furthermore, the information processing device (10) three-dimensionally analyzes a video of the specified jump section and calculates information such as a rotation angle of a blade at a time of landing on the ice.

## Description

### FIELD

The disclosed technology relates to an information processing program, an information processing device, and an information processing method.

### BACKGROUND

Conventionally, a predetermined scene is cut out from a video during a sport competition. The predetermined scene is, for example, a scene including a moment of impact on a ball in golf, baseball, tennis, or the like or a scene including jumping or landing in gymnastics or the like.

As a technology related to the scene cutout as described above, for example, an information processing device has been proposed which specifies a decisive moment from continuous motion of a subject and extracts the moment as an image. The device receives sensor data from a sensor attached to a user or an object in contact with the user, and time information corresponding to the sensor data. Furthermore, the device specifies a time at which a predetermined motion pattern occurs in the user or the object based on the sensor data and the time information. Then, the device selects one or more images from a series of images captured at predetermined time intervals and including the user or the object according to the specified time.

### Related Patent Documents

Patent Document 1: Japanese Patent Application Laid-Open (JP-A) No. 2015-82817

### SUMMARY OF INVENTION

### Technical Problem

As a scene to be cut out, a jump section of figure skating is assumed. In figure skating, a slight change such as attaching a sensor to a competitor or wear or shoes worn by the competitor may affect an accuracy of jump or the like. Therefore, it is difficult to specify a section from the start to the end of a jump in figure skating by applying the prior art.

As one aspect, an object of the disclosed technology is to specify a section from the start to the end of a jump in figure skating.

### Solution to Problem

As one aspect, the disclosed technology acquires a sound signal collected by a microphone provided in a venue including a skating rink, and a video obtained by imaging a competitor competing at the skating rink. Furthermore, the disclosed technology estimates a takeoff-from-ice time and a landing-on-ice time of a jump performed by the competitor according to silencing and return of an ice sound based on the sound signal. Then, the disclosed technology synchronizes time information of the sound signal with time information of the video and specifies, as a jump section, a section from a frame corresponding to the takeoff-from-ice time to a frame corresponding to the landing-on-ice time in the video.

### Advantageous Effects of Invention

As one aspect, there is an effect that a section from a start to an end of a jump in figure skating can be specified.

### BRIEF DESCRIPTION OF DRAWINGS

Fig. 1 is a block diagram illustrating a schematic configuration of an information creation system according to the present embodiment.
Fig. 2 is a functional block of an information processing device according to the embodiment.
Fig. 3 is a diagram for explaining estimation of a takeoff-from-ice time and a landing-on-ice time.
Fig. 4 is a diagram for explaining specification of a jump section.
Fig. 5 is a diagram for explaining a delay time of a sound signal for a video.
Fig. 6 is a diagram for explaining calculation of the positions of the tip end and the terminal end of a blade as a predetermined portion.
Fig. 7 is a diagram for explaining a reference line and a rotation angle.
Fig. 8 is a diagram illustrating a rotation angle θ calculated from each of frames included in the jump section.
Fig. 9 is an enlarged view of a portion indicated by a broken-line frame in Fig. 8.
Fig. 10 is a block diagram illustrating a schematic configuration of a computer which functions as the information processing device.
Fig. 11 is a flowchart illustrating an example of an information processing routine according to the embodiment.

### DESCRIPTION OF EMBODIMENTS

Hereinafter, an example of an embodiment according to the disclosed technology will be described with reference to the drawings. In the following embodiment, an information creation system will be described which creates information regarding a video of a jump section specified by an information processing device.

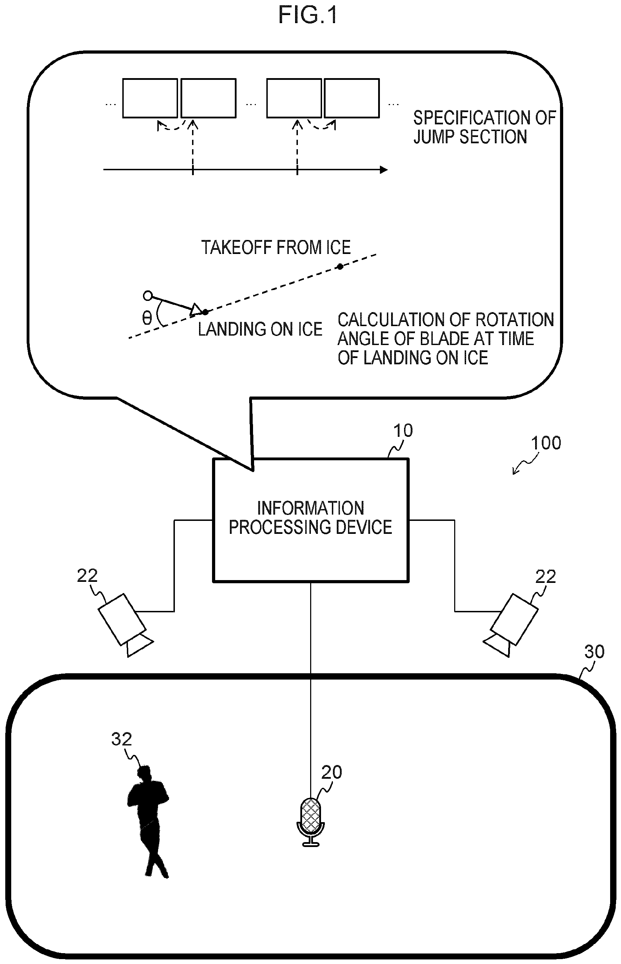

First, an outline of the information creation system according to the embodiment will be described. As illustrated in Fig. 1, an information creation system 100 includes an information processing device 10, a microphone 20, and a plurality of cameras 22. The information creation system 100 performs information processing on a sound signal output from the microphone 20 and a video output from the camera 22, and calculates and outputs information such as a rotation angle of a blade at the landing-on-ice time of a jump.

The microphone 20 is installed in ice of a skating rink 30. For example, at the time of constructing the skating rink 30, the microphone 20 can be installed in ice by being embedded in the skating rink 30 at the time of spreading ice. The microphone 20 collects a voice in a competition venue and outputs a sound signal. Since the microphone 20 is installed in the ice, in a sound component included in a sound signal collected by the microphone 20, a sound component indicating cheers, music, or the like is suppressed, and a sound component indicating a frictional sound between the surface (ice) of the skating rink 30 and the blade of a skate shoe becomes dominant. Time information is associated with each sampling point of the sound signal to be output.

Each of the plurality of cameras 22 is attached to a position where a three-dimensional position of a predetermined portion of a competitor 32 on the skating rink 30 or a wearing object worn by the competitor 32 can be measured by a stereo camera system. Each camera 22 outputs a video captured at a predetermined frame rate (for example, 30 fps, 60 fps, or the like). The output video includes a plurality of frames, and time information is associated with each frame. Note that one ToF (Time-of-Flight) type camera may be used.

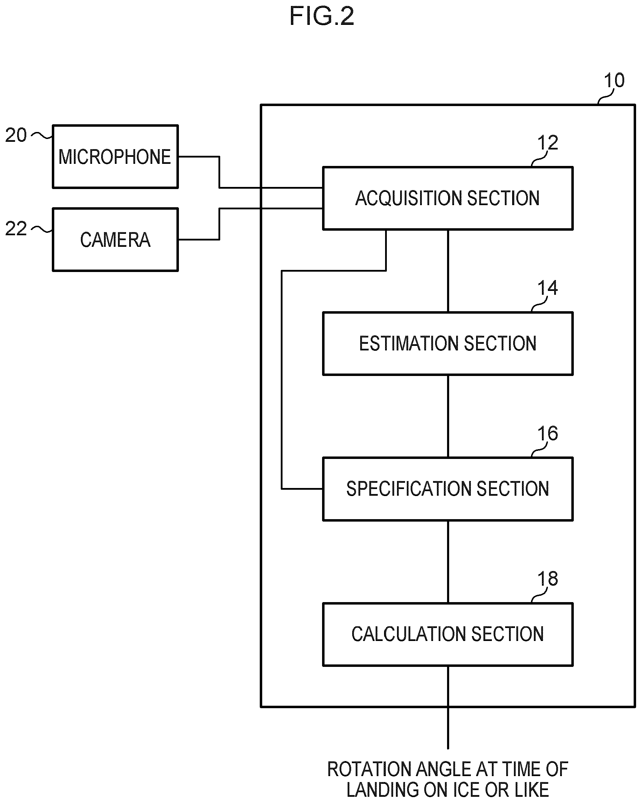

The information processing device 10 functionally includes an acquisition section 12, an estimation section 14, a specification section 16, and a calculation section 18 as illustrated in Fig. 2.

The acquisition section 12 acquires the sound signal output from the microphone 20 and the video output from each of the plurality of cameras 22. The acquisition section 12 delivers the acquired sound signal to the estimation section 14 and delivers the acquired video to the specification section 16.

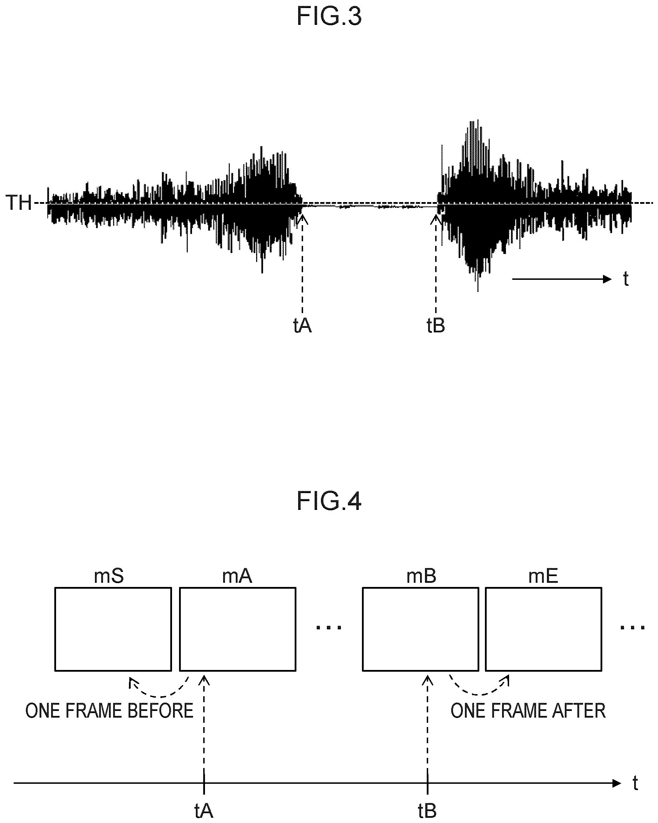

The estimation section 14 estimates a takeoff-from-ice time and a landing-on-ice time of a jump performed by the competitor according to silencing and return of an ice sound based on the sound signal. For example, the estimation section 14 estimates a takeoff-from-ice time and a landing-on-ice time of a jump performed by the competitor based on a section in which the level of the sound signal is a predetermined threshold value or less. This is based on the fact that a frictional sound between the blade and the ice disappears at the time of takeoff from the ice at the start of a jump, and the frictional sound returns at the time of landing on the ice. As the threshold value, it is sufficient if a value which can be generally regarded as silencing of the sound signal is determined. Specifically, as illustrated in Fig. 3, the estimation section 14 estimates, as a takeoff-from-ice time tA, a time at which the sound signal becomes a threshold value TH or less. Furthermore, the estimation section 14 estimates, as a landing-on-ice time tB, a time at which the sound signal which has been the threshold value TH or less exceeds the threshold value TH again.

The estimation section 14 may estimate the takeoff-from-ice time tA and the landing-on-ice time tB of the jump based on the sound signal from which a predetermined frequency component included in the sound signal has been removed. The predetermined frequency component can be, for example, a frequency component corresponding to a sound, such as cheers and music, other than frictional sound between the blade and the ice. As described above, in a case in which the microphone 20 is installed in the ice, a sound, such as cheers and music, other than the frictional sound between the blade and the ice is suppressed. However, the takeoff-from-ice time tA and the landing-on-ice time tB of the jump can be estimated with a higher accuracy by removing the frequency component corresponding to a sound other than the frictional sound between the blade and the ice. Note that, in a case in which the microphone 20 is installed not in the ice but in the venue, the sound signal includes a lot of cheers, music, and the like, and thus it is effective to remove the predetermined frequency component. The estimation section 14 delivers the estimated takeoff-from-ice time tA and landing-on-ice time tB of the jump to the specification section 16.

The specification section 16 synchronizes the time information of the sound signal with the time information of the video and specifies, as a jump section, a frame corresponding to the takeoff-from-ice time tA to a frame corresponding to the landing-on-ice time tB of the jump in the video delivered from the acquisition section 12.

Specifically, as illustrated in Fig. 4, the specification section 16 specifies, as a start frame mS corresponding to the takeoff-from-ice time tA, a frame existing a predetermined number before the frame (hereinafter, referred to as a "takeoff-from-ice frame mA") of the time information synchronized with the takeoff-from-ice time tA. The specification section 16 specifies, as an end frame mE corresponding to the landing-on-ice time tB, a frame existing a predetermined number after the frame (hereinafter, referred to as a "landing-on-ice frame mB") of the time information synchronized with the landing-on-ice time tB. The reason why the frames existing before and after the takeoff-from-ice frame mA to the landing-on-ice frame mB are included is to specify the start frame mS and the end frame mE so that the takeoff from the ice and the landing on the ice are included reliably. As illustrated in Fig. 4, the predetermined number can be, for example, one.

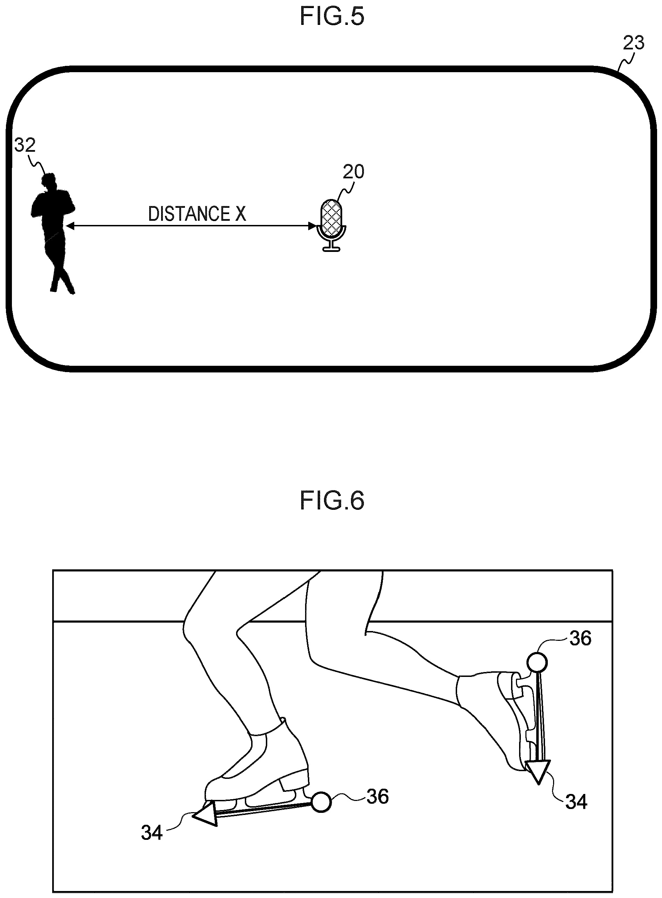

The specification section 16 may set the predetermined number to the number obtained by converting a delay time of the sound signal with respect to the video according to a distance between the competitor 32 and the microphone 20 into the number of frames. As illustrated in Fig. 5, in a case in which the distance between the competitor 32 and the microphone 20 is X [m], the delay time is X÷3230 by using a sound velocity of 3230 [m/s] in ice. Here, it is not necessary to use a strict distance X, and for example, the maximum value of the distance from the position of the microphone 20 to the end of the skating rink 30 can be set to X. For example, in a case in which X = 30 m, the delay time is 30÷3230 = 9.28 [ms]. It is sufficient if the predetermined number is set to one similarly to the example of Fig. 4 in a case in which the frame rate of the video is 30 fps or 60 fps, and the predetermined number is set to two in a case in which the frame rate of the video is 120 fps.

The specification section 16 may use the predetermined number based on the delay time in a case in which the start frame mS is specified and may use one as the predetermined number in a case in which the end frame mE is specified.

The specification section 16 extracts, as the jump section, the section from the start frame mS to the end frame mE from the video delivered from the acquisition section 12 and delivers the section to the calculation section 18.

The calculation section 18 three-dimensionally analyzes each of the frames included in the jump section delivered from the specification section 16 and calculates a three-dimensional position (x,y,z) of the predetermined portion of the competitor 32 and the wearing object worn by the competitor 32. As illustrated in Fig. 6, the predetermined portion includes a tip end 34 and a terminal end 36 of the blade of a skate shoe worn by the competitor 32. Furthermore, the predetermined portion may include each joint, a head, and a face portion such as the eyes, the nose, and the mouth of the competitor 32. Note that, as a method of recognizing these predetermined portions from each frame, an existing method such as a recognition method using a shape of the predetermined portion or a recognition method using a human skeleton model can be used.

In a case in which the information creation system 100 includes three or more cameras 22, it is sufficient if the three-dimensional position of the predetermined portion is calculated by using two videos obtained by imaging the competitor 32 at an angle suitable for calculating the three-dimensional position among the videos captured by the plurality of cameras 22.

The calculation section 18 calculates an absolute angle of the blade with reference to an imaging direction of the camera 22 by using the positions of the tip end 34 and the terminal end 36 of the blade calculated from each of the frames included in the jump section. For example, the calculation section 18 can calculate, as the absolute angle of the blade, an angle formed by an imaging direction of the camera 22 or a line perpendicular to the imaging direction and a line connecting the tip end 34 and the terminal end 36 of the blade. Note that it is sufficient if one camera 22 of the plurality of cameras 22 is determined as a main camera, and the absolute angle of the blade is calculated with reference to an imaging direction of the main camera 22. Furthermore, the calculation section 18 converts the absolute angle of the blade into an angle (hereinafter, referred to as a "rotation angle θ") with respect to a reference line for determining insufficient rotation of the jump.

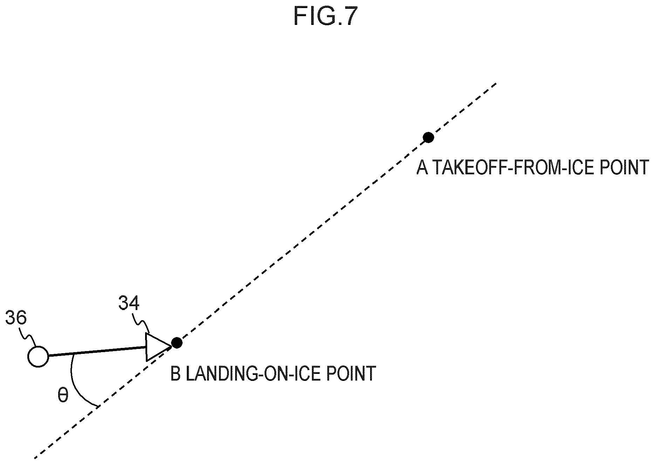

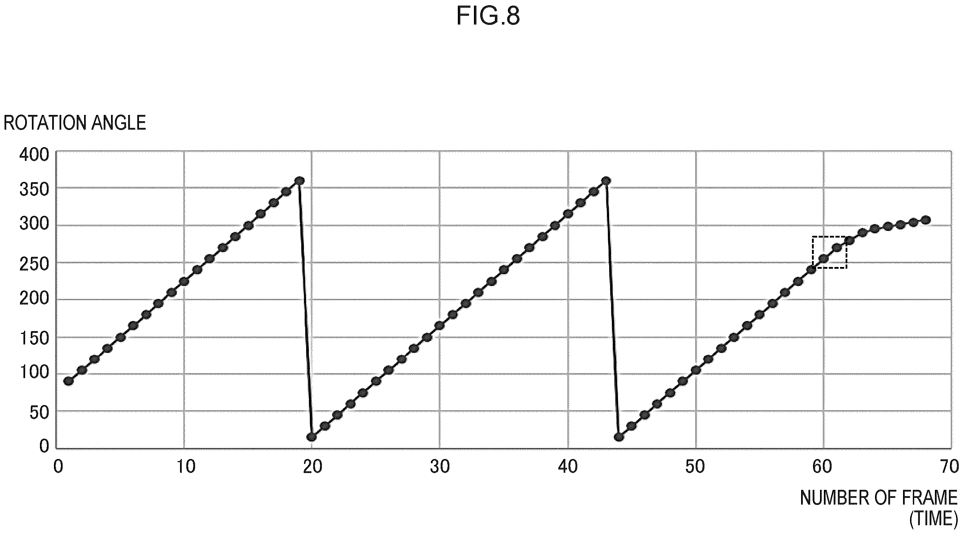

Specifically, the calculation section 18 specifies the reference line based on the position of the tip end 34 of the blade at each of the takeoff-from-ice time tA and the landing-on-ice time tB. More specifically, as illustrated in Fig. 7, the calculation section 18 specifies, as a takeoff-from-ice point A, the position of the tip end 34 of the blade calculated from the takeoff-from-ice frame mA. Furthermore, the calculation section 18 specifies, as a landing-on-ice point B, the position of the tip end 34 of the blade calculated from the landing-on-ice frame mB. Then, with a straight line passing through the takeoff-from-ice point A and the landing-on-ice point B as the reference line, the calculation section 18 calculates the rotation angle θ of the blade by subtracting an angle difference between a line perpendicular to the imaging direction of the camera 22 and the reference line from the absolute angle of the blade. Fig. 8 illustrates the rotation angle θ calculated from each of the frames included in the jump section.

The calculation section 18 calculates a delay time Δt of the sound signal with respect to the video at the time of landing on the ice. As described above, the delay time is a distance X [m]÷3230 [m/s] (sound velocity in ice). Here, the distance X is a distance between the position of the microphone 20 and the landing-on-ice point B.

The calculation section 18 calculates the rotation angle of the blade at the time of landing on the ice based on a rotation angle θ(mE) calculated from the end frame mE and a rotation angle θ(mE-1) calculated from a frame mE-1 existing one before the end frame mE.

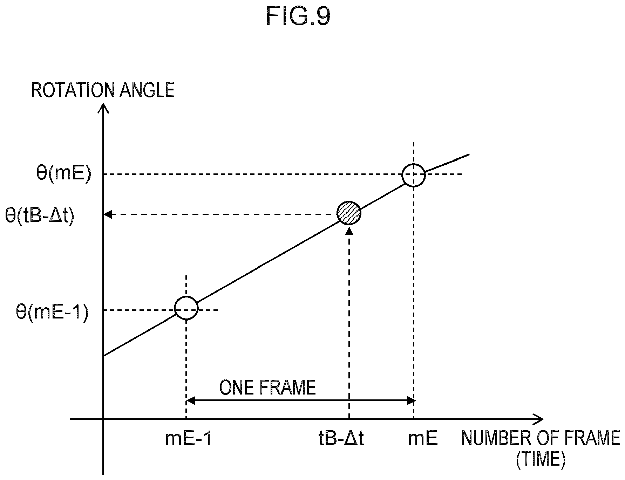

A specific description will be given with reference to Fig. 9. Fig. 9 is an enlarged view of a portion indicated by a broken-line frame in Fig. 8. A landing-on-ice time tB-Δt which is obtained by correcting the landing-on-ice time tB estimated based on the sound signal in consideration of the calculated delay time Δt is included within a time for one frame from the frame mE-1 to the frame mE. Note that, here, the delay time Δt is a minute time as compared with a time for one frame. The calculation section 18 assumes that a rotation speed during the jump is substantially constant, and linearly interpolates a rotation angle between the frame mE-1 and the frame mE by using the rotation angle θ(mE-1) and the rotation angle θ(mE). Then, the calculation section 18 calculates the rotation angle corresponding to the corrected landing-on-ice time tB-Δt as a rotation angle θ(tB-Δt) at the time of landing on the ice.

The calculation section 18 can also calculate other information based on the three-dimensional position of the predetermined portion corresponding to the jump section. For example, the calculation section 18 can calculate a position of a waist as the predetermined portion and calculate, as a jump height, a difference between the minimum value and the maximum value of the position of the waist calculated from each frame included in the jump section. Furthermore, the calculation section 18 can calculate, as a jump distance, a distance from the takeoff-from-ice point A to the landing-on-ice point B. Furthermore, the calculation section 18 can calculate a rotation speed from a time from the takeoff-from-ice time tA to the landing-on-ice time tB and a change in the rotation angle in the jump section. Furthermore, the calculation section 18 can calculate a take-off speed from a time from the start frame mS to a predetermined frame and a change amount of the position of the predetermined portion during that time.

The calculation section 18 outputs the rotation angle θ(tB-Δt) at the time of landing on the ice and other calculated information. The rotation angle θ(tB-Δt) at the time of landing on the ice can be used for determination of insufficient rotation of the jump or the like. Furthermore, the output information can also be used as a statistic to be displayed on a screen of television broadcasting or the like.

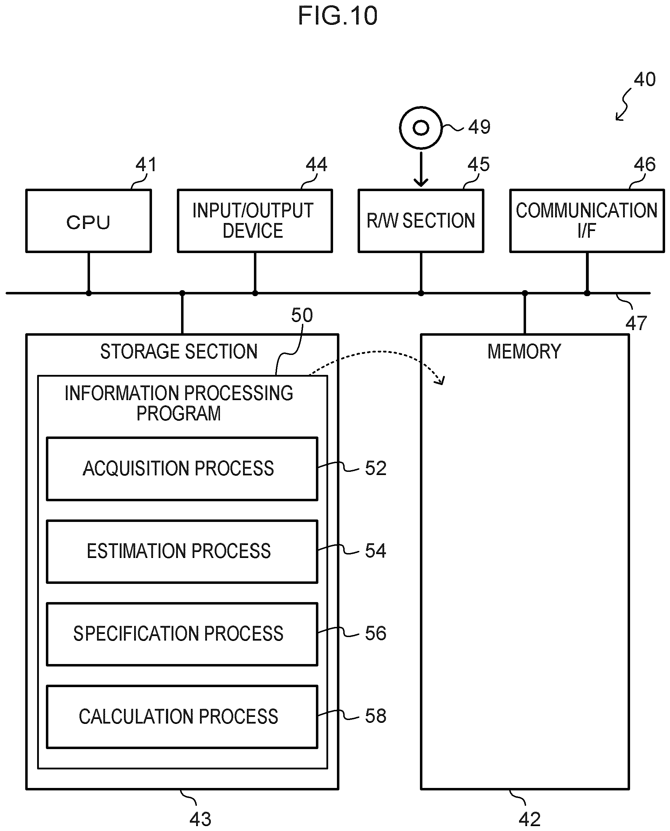

The information processing device 10 can be realized by, for example, a computer 40 illustrated in Fig. 10. The computer 40 includes a central processing unit (CPU) 41, a memory 42 as a temporary storage area, and a nonvolatile storage section 43. Furthermore, the computer 40 includes an input/output device 44 such as an input section and a display section, and a read/write (R/W) section 45 which controls reading and writing of data with respect to a storage medium 49. Furthermore, the computer 40 includes a communication interface (I/F) 46 connected to a network such as the Internet. The CPU 41, the memory 42, the storage section 43, the input/output device 44, the R/W section 45, and the communication I/F 46 are connected to each other via a bus 47.

The storage section 43 can be realized by a hard disk drive (HDD), a solid state drive (SSD), a flash memory, or the like. The storage section 43 as a storage medium stores an information processing program 50 for causing the computer 40 to function as the information processing device 10. The information processing program 50 includes an acquisition process 52, an estimation process 54, a specification process 56, and a calculation process 58.

The CPU 41 reads the information processing program 50 from the storage section 43, develops the program in the memory 42, and sequentially executes the processes included in the information processing program 50. The CPU 41 executes the acquisition process 52 to operate as the acquisition section 12 illustrated in Fig. 2. Furthermore, the CPU 41 executes the estimation process 54 to operate as the estimation section 14 illustrated in Fig. 2. Furthermore, the CPU 41 executes the specification process 56 to operate as the specification section 16 illustrated in Fig. 2. Furthermore, the CPU 41 executes the calculation process 58 to operate as the calculation section 18 illustrated in Fig. 2. As a result, the computer 40 which has executed the information processing program 50 functions as the information processing device 10. Note that the CPU 41 which executes a program is hardware.

The functions realized by the information processing program 50 can also be realized by, for example, a semiconductor integrated circuit, more specifically, an application specific integrated circuit (ASIC) or the like.

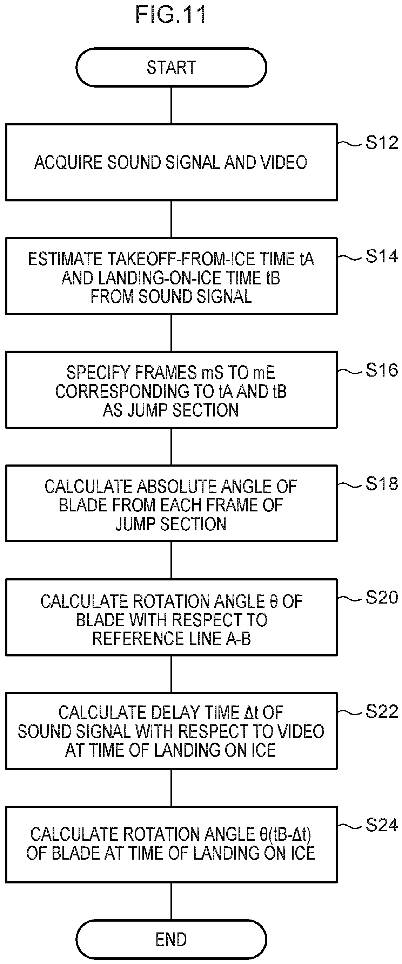

Next, an operation of the information creation system 100 according to the embodiment will be described. When the sound signal output from the microphone 20 and the video captured by each of the plurality of cameras 22 are input to the information processing device 10, an information processing routine illustrated in Fig. 11 is executed in the information processing device 10. Note that the information processing routine is an example of an information processing method of the disclosed technology.

In step S12, the acquisition section 12 acquires a sound signal and a video input to the information processing device 10. The acquisition section 12 delivers the acquired sound signal to the estimation section 14 and delivers the acquired video to the specification section 16.

Next, in step S14, the estimation section 14 estimates, as the takeoff-from-ice time tA, a time at which the sound signal becomes the threshold value TH or less, and estimates, as the landing-on-ice time tB, a time at which the sound signal which has become the threshold value TH or less exceeds the threshold value TH again. The estimation section 14 delivers the estimated takeoff-from-ice time tA and landing-on-ice time tB of the jump to the specification section 16.

Next, in step S16, the specification section 16 specifies, as the start frame mS corresponding to the takeoff-from-ice time tA, a frame existing a predetermined number (for example, one frame) before the takeoff-from-ice frame mA of the time information synchronized with the takeoff-from-ice time tA. Furthermore, the specification section 16 specifies, as the end frame mE corresponding to the landing-on-ice time tB, a frame existing a predetermined number (for example, one frame) after the landing-on-ice frame mB of the time information synchronized with the landing-on-ice time tB. The specification section 16 extracts, as the jump section, the section from the start frame mS to the end frame mE from the video delivered from the acquisition section 12 and delivers the section to the calculation section 18.

Next, in step S18, the calculation section 18 three-dimensionally analyzes each of the frames included in the jump section delivered from the specification section 16, and calculates a three-dimensional position (x,y,z) of the predetermined portion including the tip end 34 and the terminal end 36 of the blade. Then, the calculation section 18 calculates, as the absolute angle of the blade, an angle formed by a line perpendicular to the imaging direction of the camera 22 and a line connecting the tip end 34 and the terminal end 36 of the blade.

Next, in step S20, the calculation section 18 specifies, as the takeoff-from-ice point A, the position of the tip end 34 of the blade calculated from the takeoff-from-ice frame mA, and specifies, as the landing-on-ice point B, the position of the tip end 34 of the blade calculated from the landing-on-ice frame mB. Then, with a straight line passing through the takeoff-from-ice point A and the landing-on-ice point B as the reference line, the calculation section 18 calculates the rotation angle θ of the blade by subtracting an angle difference between a line perpendicular to the imaging direction of the camera 22 and the reference line from the absolute angle of the blade.

Next, in step S22, the calculation section 18 calculates the distance X between the position of the microphone 20 and the landing-on-ice point B, and calculates the delay time Δt of the sound signal with respect to the video at the time of landing on the ice as Δt = distance X [m]÷3230 [m/s] (sound velocity in ice).

Next, in step S24, the calculation section 18 linearly interpolates a rotation angle between the frame mE-1 and the frame mE by using the rotation angles θ(mE-1) and θ(mE) and calculates the rotation angle corresponding to the corrected landing-on-ice time tB-Δt as the rotation angle θ(tB-Δt) at the time of landing on the ice. Furthermore, the calculation section 18 may calculate other information based on the three-dimensional position of the predetermined portion corresponding to the jump section. The calculation section 18 outputs the calculated rotation angle θ(tB-Δt) at the time of landing on the ice and the calculated other information, and the information processing routine is ended.

As described above, according to the information creation system according to the embodiment, the information processing device acquires the sound signal collected by the microphone provided in the skating rink and the video obtained by imaging the competitor competing in the skating rink. Then, the information processing device estimates the takeoff-from-ice time and the landing-on-ice time of the jump performed by the competitor based on the section in which the level of the sound signal is the predetermined threshold value or less. Furthermore, the information processing device synchronizes the time information of the sound signal with the time information of the video and specifies, as the jump section, a section from the frame corresponding to the takeoff-from-ice time to the frame corresponding to the landing-on-ice time in the video. As a result, it is possible to specify a section from the start to the end of the jump in figure skating without attaching a sensor or the like to the competitor.

As compared with a case in which the start and end of the jump are specified only by the image analysis of the video, the takeoff-from-ice time and the landing-on-ice time can be estimated with a higher accuracy by using the sound signal, and the jump section can be specified with a high accuracy by the estimated time.

In the determination of insufficient rotation of the jump, the angle of the blade at the time of landing on the ice is used. When the determination is made only by the video, in a case in which the frame rate is 30 fps, an accurate determination cannot be performed since a rotation of about 60° is made during one frame. In the embodiment, the rotation angle can be calculated at a time finer than a time in time units of one frame by using the landing-on-ice time estimated using the sound signal, so that it is possible to accurately support the determination of insufficient rotation.

In the embodiment, an aspect has been described in which the information processing program is stored (installed) in the storage section in advance, but the present invention is not limited thereto. The program according to the disclosed technology can also be provided in a form of being stored in a storage medium such as a CD-ROM, a DVD-ROM, or a USB memory.

### Explanation of Reference Numerals

- 10: information processing device
- 12: acquisition section
- 14: estimation section
- 16: specification section
- 18: calculation section
- 20: microphone
- 22: camera
- 30: skating rink
- 32: competitor
- 34: tip end of blade
- 36: terminal end of blade
- 40: computer
- 41: CPU
- 42: memory
- 43: storage section
- 49: storage medium
- 50: information processing program
- 100: information creation system

## Claims

1. An information processing program for causing a computer to execute processing, the processing comprising:
acquiring a sound signal collected by a microphone provided in a venue including a skating rink, and a video obtained by imaging a competitor competing at the skating rink;
estimating a takeoff-from-ice time and a landing-on-ice time of a jump performed by the competitor according to silencing and return of an ice sound based on the sound signal; and
synchronizing time information of the sound signal with time information of the video and specifying, as a jump section, a section from a frame corresponding to the takeoff-from-ice time to a frame corresponding to the landing-on-ice time in the video.

2. The information processing program according to claim 1, the processing further comprising:
specifying a three-dimensional position of a predetermined portion of the competitor and a wearing object worn by the competitor based on the video; and
calculating an angle of the predetermined portion with respect to a reference line based on the position of the predetermined portion at each of the takeoff-from-ice time and the landing-on-ice time, from each frame included in the jump section.

3. The information processing program according to claim 2, wherein:
an angle of the predetermined portion at the landing-on-ice time is calculated based on an angle calculated from the frame corresponding to the landing-on-ice time and an angle calculated from a frame that is one frame before the frame corresponding to the landing-on-ice time.

4. The information processing program according to claim 2 or 3, wherein:
at least one of a take-off speed, a jump height, a jump distance or a rotation speed is calculated based on the three-dimensional position of the predetermined portion corresponding to the jump section.

5. The information processing program according to any one of claims 2 to 4, wherein:
the predetermined portion is a portion for which it is possible to specify a direction of a blade of a skate shoe worn by the competitor.

6. The information processing program according to any one of claims 1 to 5, wherein:
a frame that is a predetermined number of frames before a frame of time information synchronized with the takeoff-from-ice time is specified as the frame corresponding to the takeoff-from-ice time, and a frame that is a predetermined number of frames after a frame of time information synchronized with the landing-on-ice time is specified as the frame corresponding to the landing-on-ice time.

7. The information processing program according to claim 6, wherein:
the predetermined number is set to one or a number obtained by converting a delay time of the sound signal with respect to the video, according to a distance between the competitor and the microphone, into a number of frames.

8. The information processing program according to any one of claims 1 to 7, wherein:
the microphone is provided in ice of the skating rink.

9. The information processing program according to any one of claims 1 to 8, wherein:
the takeoff-from-ice time and the landing-on-ice time are estimated based on a sound signal from which a predetermined frequency component included in the sound signal has been removed.

10. An information processing device, comprising:
an acquisition section configured to acquire a sound signal collected by a microphone provided in a skating rink, and a video obtained by imaging a competitor competing at the skating rink;
an estimation section configured to estimate a takeoff-from-ice time and a landing-on-ice time of a jump performed by the competitor based on a section in which a level of the sound signal is a predetermined threshold value or less; and
a specification section configured to synchronize time information of the sound signal with time information of the video and specify, as a jump section, a section from a frame corresponding to the takeoff-from-ice time to a frame corresponding to the landing-on-ice time in the video.

11. The information processing device according to claim 10, wherein:
the acquisition section acquires, as the video, a video for which it is possible to measure a three-dimensional position of a predetermined portion of the competitor and a wearing object worn by the competitor, the device further comprising:
a calculation section configured to calculate an angle of the predetermined portion with respect to a reference line based on the position of the predetermined portion at each of the takeoff-from-ice time and the landing-on-ice time, from each frame included in the jump section.

12. The information processing device according to claim 11, wherein:
the calculation section calculates an angle of the predetermined portion at the landing-on-ice time based on an angle calculated from the frame corresponding to the landing-on-ice time and an angle calculated from a frame that is one frame before the frame corresponding to the landing-on-ice time.

13. The information processing device according to claim 11 or 12, wherein:
the calculation section calculates at least one of a take-off speed, a jump height, a jump distance or a rotation speed based on the three-dimensional position of the predetermined portion corresponding to the jump section.

14. The information processing device according to any one of claims 11 to 13, wherein:
the predetermined portion is a portion for which it is possible to specify a direction of a blade of a skate shoe worn by the competitor.

15. The information processing device according to any one of claims 10 to 14, wherein:
the specification section specifies a frame that is a predetermined number of frames before a frame of time information synchronized with the takeoff-from-ice time as the frame corresponding to the takeoff-from-ice time, and specifies a frame that is a predetermined number of frames after a frame of time information synchronized with the landing-on-ice time as the frame corresponding to the landing-on-ice time.

16. The information processing device according to claim 15, wherein:
the specification section sets the predetermined number to one or a number obtained by converting a delay time of the sound signal with respect to the video, according to a distance between the competitor and the microphone, into a number of frames.

17. The information processing device according to any one of claims 10 to 16, wherein:
the microphone is provided in ice of the skating rink.

18. The information processing device according to any one of claims 10 to 17, wherein:
the estimation section estimates the takeoff-from-ice time and the landing-on-ice time based on the sound signal from which a predetermined frequency component included in the sound signal has been removed.

19. An information processing method for causing a computer to execute processing, the processing comprising:
acquiring a sound signal collected by a microphone provided in a skating rink, and a video obtained by imaging a competitor competing at the skating rink;
estimating a takeoff-from-ice time and a landing-on-ice time of a jump performed by the competitor based on a section in which a level of the sound signal is a predetermined threshold value or less; and
synchronizing time information of the sound signal with time information of the video and specifying, as a jump section, a section from a frame corresponding to the takeoff-from-ice time to a frame corresponding to the landing-on-ice time in the video.

20. A storage medium storing an information processing program for causing a computer to execute processing, the processing comprising:
acquiring a sound signal collected by a microphone provided in a skating rink, and a video obtained by imaging a competitor competing at the skating rink;
estimating a takeoff-from-ice time and a landing-on-ice time of a jump performed by the competitor based on a section in which a level of the sound signal is a predetermined threshold value or less; and
synchronizing time information of the sound signal with time information of the video and specifying, as a jump section, a section from a frame corresponding to the takeoff-from-ice time to a frame corresponding to the landing-on-ice time in the video.
